# EUROPÄISCHE PATENTSCHRIFT

(11) **EP 0 560 119 B1**
(45) Veröffentlichungstag und Bekanntmachung des Hinweises auf die Patenterteilung: **06.12.1995**
(21) Anmeldenummer: 93102835.1
(22) Anmeldetag: 24.02.1993
(51) Int. Cl.: H02G 3/08, H02B 1/32

(54) **Schaltschrank**
Switch cabinet
Armoire de commutation

(30) Priorität: 07.03.1992 DE 4207281
(43) Veröffentlichungstag der Anmeldung: 15.09.1993
(73) Patentinhaber: Rittal-Werk Rudolf Loh GmbH & Co. KG, 35745 Herborn (DE)
(72) Erfinder: Zachrai, Jürgen, D-6340 Dillenburg-Nanzenbach (DE)
(74) Vertreter: Jeck, Anton, Dipl.-Ing.

(56) Entgegenhaltungen:
- DE-A- 4 105 117
- GB-A- 1 413 850
- IBM TECHNICAL DISCLOSURE BULLETIN Bd. 31, Nr. 6, 1. November 1988, ARMONK, NY, US, Seiten 277-278, XP000031192 : "Conductive collar for fastening and grounding insulated cable with cable shield"

## Beschreibung

Die Erfindung betrifft einen Schaltschrank mit einer offenen Bodenseite, die von Rahmenschenkeln eines Rahmengestelles umschlossen und mittels einzelner, aneinanderreihbarer Bodenbleche verschließbar ist, bei dem die einzelnen Bodenbleche mit ihren Schmalseiten auf einem Auflageabsatz der zugekehrten Rahmenschenkel aufliegen und mit diesen Rahmenschenkeln verbunden sind, bei dem die Bodenbleche zumindest entlang einer Längsseite einen abgekanteten Rand aufweisen, bei dem Dichtungsstreifen die aufeinanderstoßenden Längsseiten benachbarter Bodenbleche abdichten und bei dem Kabel durch Aussparungen der Bodenseite eingeführt sind.

Ein Schaltschrank mit einer Kabeleinführung dieser Art ist durch die DE 78 16 729 U1 bekannt. Die einzelnen Bodenbleche sind an den einander zugekehrten Längsseiten mit einem abgekanteten Rand versehen, auf den ein Kunststoff-Schaumstoffblock angebracht ist. Die benachbarten Bodenbleche werden so aneinandergereiht, daß die Kunststoff-Schaumstoffblöcke die Trennstelle zwischen benachbarten Bodenblechen dicht verschließen. Die Kabel werden unter Verformung der beiden Kunststoff-Schaumstoffblöcke zwischen die beiden Kunststoff-Schaumstoffblöcke eingeführt. Werden Kabel mit stark unterschiedlichen Durchmessern nebeneinander eingeführt, dann dichten die beiden Kunststoff-Schaumstoffblöcke die Trennstelle und die eingeführten Kabel nicht mehr eindeutig ab.

Wie die DE 25 37 530 A1 zeigt, sind auch in einen Durchbruch einrastbare Kabeltüllen mit stufenweise abgesetzten Zapfenstücke mit unterschiedlichem Innendurchmesser bekannt, die normalerweise verschlossen sind. Die Anzahl der Zapfenstücke bestimmt dabei die Anzahl der Kabel mit entsprechenden Außendurchmessern, welche dicht über diese Kabeltülle eingeführt werden können. Dabei werden die Zapfenstücke mit den jeweils kleineren Innendurchmessern von der Kabeltülle abgetrennt. Die Kabeltülle besteht aus elastischem Kunststoff oder Gummi und die Innendurchmesser der Zapfenstücke sind jeweils etwas kleiner als die Außendurchmesser der zugeordneten Kabel, um eine dichte Kabeleinführung zu erhalten.

Es ist Aufgabe der Erfindung, bei einem Schaltschrank der eingangs erwähnten Art die Kabeleinführung in der Bodenseite so zu gestalten, daß eine Vielzahl unterschiedlicher Kabel dicht in den Schaltschrank eingeführt werden können, wobei eine einfache Anpassung an die Kabeldurchmesser und eine einfache Erweiterung für weitere Kabel möglich ist.

Diese Aufgabe wird nach der Erfindung dadurch gelöst, daß zumindest ein Teil der Bodenbleche entlang der Längsseite mit dem Rand Aussparungen aufweist und daß in die Aussparungen Kabeltüllen einsetzbar sind, die stufenweise abgesetzte Zapfenstücke mit unterschiedlichen Innendurchmessern aufweisen.

Je nach Bedarf wird die Bodenseite des Schaltschrankes mit mehr oder weniger Bodenblechen mit Kabeltüllen verschlossen. Die Aussparungen in den Bodenblechen nehmen Kabeltüllen auf, die gleich oder unterschiedlich ausgebildet sein können. Jedes eingeführte Kabel ist individuell eingeführt und daher eindeutig abgedichtet.

Das Einsetzen der Kabeltüllen in die Aussparungen wird nach einer Ausgestaltung dadurch erleichtert, daß die Kabeltüllen an einer portalartigen Grundplatte angeformt sind, die eine über die portalartige Seite verlaufende Nut aufweisen, und daß die zwischen den portalartigen Aussparungen verbleibenden Randstücke der Bodenbleche beidseitig Aufnahmenuten aufweisen, die sich an die Unterseite des Bodenbleches anschließen.

Die Ausgestaltung kann einmal so sein, daß in einem Bodenblech in gleichmäßigen Abständen identische Aussparungen eingebracht sind, in die identische Grundplatten mit gleichen oder unterschiedlichen Kabeltüllen einsetzbar sind, oder zum anderen so, daß in einem Bodenblech unterschiedlich große Aussparungen eingebracht sind und daß in die Aussparungen unterschiedliche Kabeltüllen einsetzbar sind, um eine große Variation in der Auswahl der Kabeltüllen zu bekommen.

Dabei kann die Variationsmöglichkeit dadurch noch erhöht werden, daß eine in die Aussparung einsetzbare Grundplatte mehrere Kabeltüllen trägt, die identische oder unterschiedliche Zapfenstücke aufweisen.

Im Lieferzustand ist vorgesehen, daß alle Aussparungen aller Bodenbleche mit Kabeltüllen bestückt sind, bei denen das kleinste Zapfenstück verschlossen ist.

Die Festlegung der Bodenbleche im Schaltschrank kann so erfolgen, daß zur Erdung der Bodenbleche mit oder ohne Aussparungen im Bereich der Schmalseiten Bohrungen, aufgeschweißte Bolzen oder aufgeschweißte Erdungsflachstecker vorgesehen sind, wobei die Bohrungen auch als Befestigungsbohrungen für die Verschraubung der Bodenbleche mit den zugekehrten Rahmenschenkeln des Rahmengestelles verwendet sind, oder daß ein Mutternteil mit einem Halteansatz in eine Befestigungsaufnahme des zugekehrten Rahmenschenkels eingeführt ist und daß sich eine in das Mutternteil eingeschraubte Spannschraube auf dem Bodenblech abstützt und dieses am Auflageabsatz verspannt.

Die Erfindung wird anhand eines in den Zeichnungen dargestellten Ausführungsbeispiels näher erläutert. Es zeigt:
- Fig. 1: in perspektivischer Ansicht ein Bodenblech mit identischen Aussparungen für identische Kabeltüllen,
- Fig. 2: in perspektivischer Ansicht ein Bodenblech mit unterschiedlichen Aussparungen für unterschiedliche Kabeltüllen, und
- Fig. 3: in perspektivischer Teilansicht die Bodenseite eines Schaltschrankes mit den zum Abdecken verwendeten Bodenblechen.

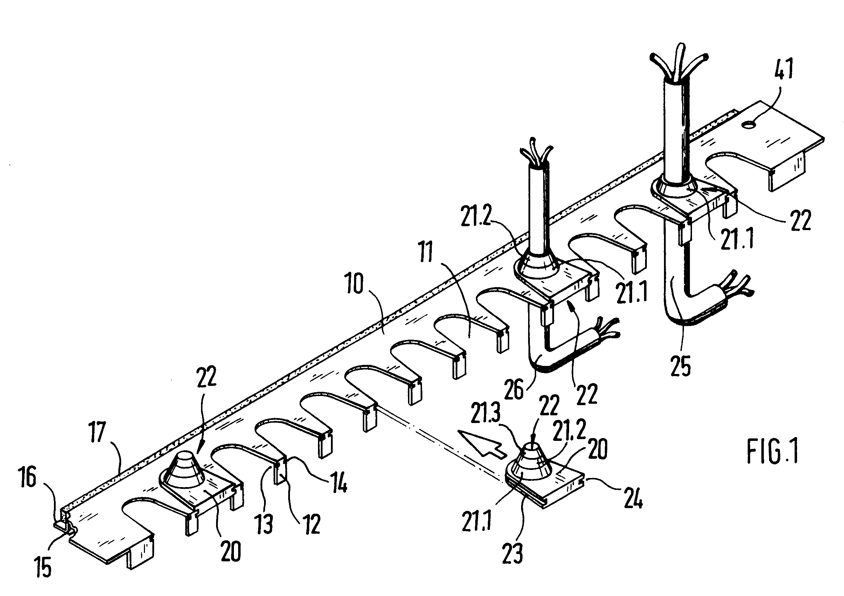

In Fig. 1 ist ein schmales Bodenblech 10 gezeigt, das an der einen Längsseite doppelt abgekantet ist, wie die Abschnitte 15 und 16 zeigen. Der horizontale Abschnitt 16 dient als Auflage für ein benachbartes Bodenblech und am vertikalen Abschnitt 15 ist ein Dichtungsstreifen angebracht. An der anderen Längsseite sind in gleichmäßigen Abständen identische, portalartige Aussparungen 11 eingebracht, die sich auch über den Rand fortsetzen, so daß nur noch Randstücke 12 zwischen Aussparungen 11 übrig bleiben. Diese Randstücke 12 tragen beidseitig im Anschluß an die Unterseite des Bodenbleches 10 Aufnahmenuten 13 und 14. Das Bodenblech 10 wird zuerst gestanzt und dann entsprechend abgekantet.

In die Aussparungen 11 sind identische Kabeltüllen 22 mit einer Grundplatte 20 einsteckbar. Die portalartige Grundplatte 20 hat eine über die portalartige Seite verlaufende Nut, wie die Nutabschnitte 23 und 24 zeigen, so daß sie den Rand um die portalartige Aussparung 11 aufnehmen kann. An die Grundplatte 20 ist die Kabeltülle 22 angeformt, die im Innendurchmesser abgesetzte Zapfenstücke 21.1, 21.2 und 21.3 aufweisen. Das Zapfenstück 21.3 mit dem kleinsten Innendurchmesser ist oben verschlossen. Die Innendurchmesser der Zapfenstücke 21.1, 21.2 und 21.3 sind etwas kleiner als zugeordnete Kabelaußendurchmesser. Da die Kabeltülle 22 aus elastischem Kunststoff oder Gummi besteht, wird ein eingeführtes Kabel eindeutig abgedichtet. Wird das Zapfenstück 21.3 abgetrennt, dann kann ein entsprechend dickes Kabel 26 dicht eingeführt werden. Werden jedoch die Zapfenstücke 21.2 und 21.3 abgetrennt, dann kann ein Kabel 25 mit entsprechend größerem Außendurchmesser dicht eingeführt werden. Im Bereich der Schmalseiten kann das Bodenblech 10 Befestigungsbohrungen 41 tragen, so daß es mit dem Rahmengestell des Schaltschrankes verschraubt werden kann.

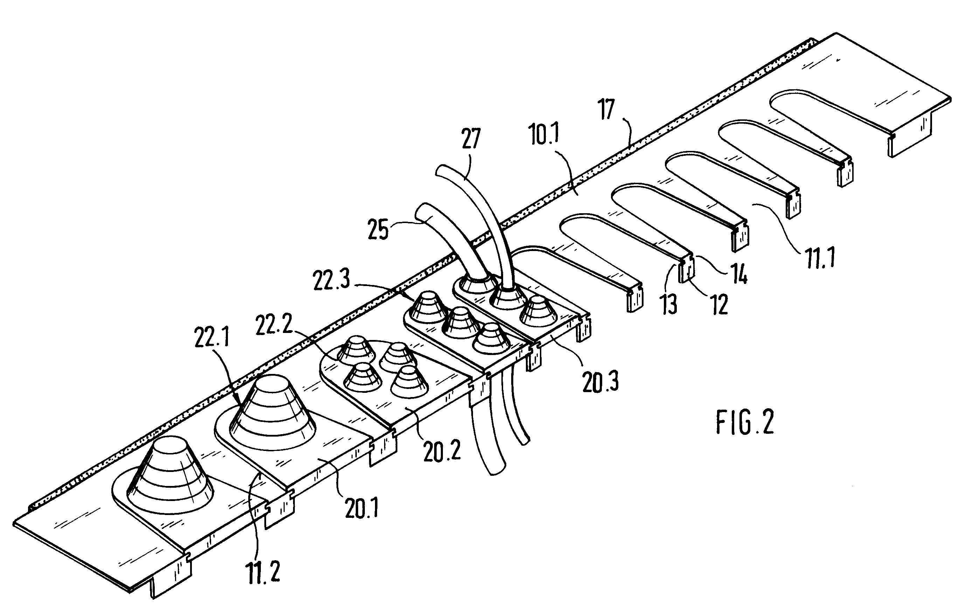

Das Bodenblech 10.1 nach Fig. 2 ist etwas breiter und weist portalartige Aussparungen 11.1 und 11.2 unterschiedlicher Breite und größerer Tiefe wie die Aussparungen 11 des Bodenbleches 10 auf. In die Aussparungen 11.2 können Kabeltüllen 22.1 mit einer Grundplatte 20.1 oder Kabeltüllen 22.2 mit mehreren, z.B. vier Kabeltüllen 22.2 eingesetzt werden. Die größeren Kabeltüllen 22.1 weisen z.B. vier Zapfenstücke auf, während die kleineren Kabeltüllen 22 nur drei Zapfenstücke aufweisen. In die Aussparungen 11.1 werden Grundplatten 20.3 mit drei hintereinander angeordneten Kabeltüllen 22.3 mit jeweils drei Zapfenstücken eingesetzt, wobei in einer Aussparung 11 durch Abtrennen unterschiedlicher Anzahl von Zapfenstücken auch unterschiedlich dicke Kabel dicht eingeführt werden können, wie die Kabel 25 und 27 zeigen.

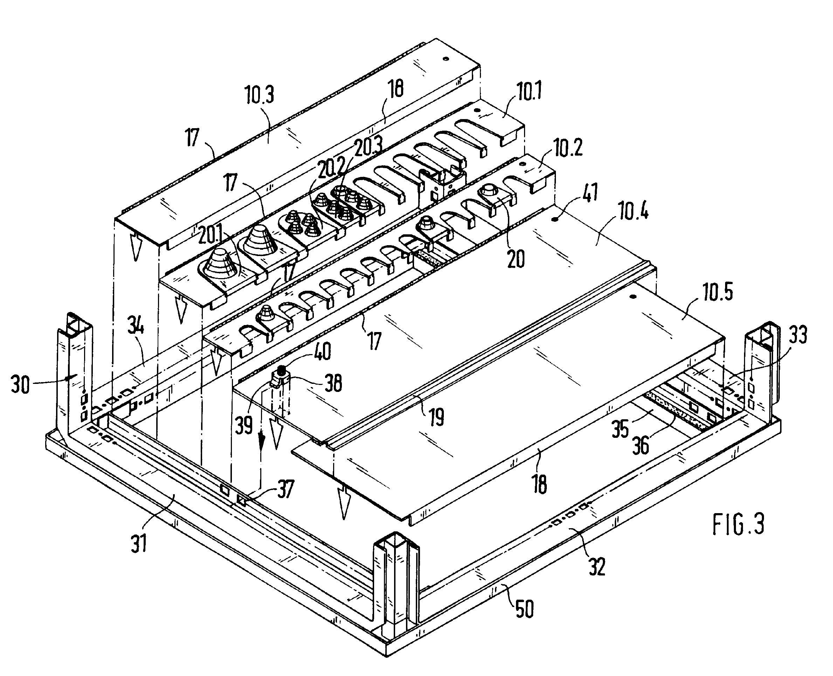

Die Fig. 3 zeigt den unteren Teil eines Rahmengestelles 30, wobei die Rahmenschenkel 31, 32, 33 und 34 einen unteren Rahmen bilden, der die offene Bodenseite des Schaltschrankes umschließt. Die Rahmenschenkel 31 und 33 bilden einen nach innen gerichteten, horizontalen Auflageabsatz 35, auf dem ein Dichtungsstreifen 36 aufgebracht ist. Die Bodenbleche 10 und 10.1 mit ihren Kabeltüllen und die normalen Bodenbleche 10.3, 10.4 und 10.5 ohne Aussparungen und Kabeltüllen liegen mit ihren Schmalseiten auf diesem Auflageabsatz 35 auf und können mit den Rahmenschenkeln 31 und 33 verschraubt werden, wie die Befestigungsbohrungen 41 andeuten. Die Befestigung eines Bodenbleches, z.B. 10.4, kann aber auch über ein Mutternteil 38 erfolgen, das mit einem Halteansatz 39 in eine Befestigungsaufnahme 37 des zugekehrten Rahmenschenkels, z.B. 31, eingeführt ist. Die in das Mutternteil 38 eingeschraubte Spannschraube 40 stützt sich auf dem Bodenblech, z.B. 10.4, ab und verspannt es gegen den Auflageabsatz 35.

Die Bodenbleche 10.1 und 10 reihen sich an das Bodenblech 10.3 an, welches mit dem Dichtungsstreifen 17 zum Rahmenschenkel 34 hin abdichtet und dem Bodenblech 10 zugekehrt einen durchgehenden Rand 18 aufweist. An der zugekehrten Längsseite des Bodenbleches 10.1 ist ein Dichtungsstreifen 17 angebracht, der zum Rand 18 des Bodenbleches 10.3 hin abdichtet. Der Dichtungsstreifen 17 des Bodenbleches 10 dichtet zu der mit Aussparungen und eingesetzten Kabeltüllen versehenen Längsseite des Bodenbleches 10.1 hin ab. Der Dichtungsstreifen 17 am Bodenblech 10.4 übernimmt die Abdichtung zu der Längsseite des Bodenbleches 10 mit den Aussparungen und eingesetzten Kabeltüllen hin. Das Bodenblech 10.4 überdeckt mit einem Abdeckrand 19 das Bodenblech 10.5, wobei im Überlappungsbereich ebenfalls ein Dichtungsstreifen angeordnet sein kann. Der Rand 18 des Bodenbleches 10.5 dichtet zum Rahmenschenkel 32 hin ab, wozu ebenfalls ein Dichtungsstreifen verwendet wird.

Anstelle des Bodenbleches 10.4 können auch weitere Bodenbleche 10 oder 10.1 zum Abdecken der Bodenseite des Schaltschrankes verwendet werden, wenn die Anzahl der Kabeltüllen in den Bodenblechen 10 und 10.1 nicht ausreicht. Im Lieferzustand sind die Bodenbleche 10 und 10.1 voll mit geschlossenen Kabeltüllen bestückt, so daß die Kabel am Einsatzort beliebig eingeführt werden können.

## Patentansprüche

1. Schaltschrank mit einer offenen Bodenseite, die von Rahmenschenkeln eines Rahmengestelles umschlossen und mittels einzelner, aneinanderreihbarer Bodenbleche (10,10.1) verschließbar ist, bei dem die einzelnen Bodenbleche (10,10.1) mit ihren Schmalseiten auf einem Auflageabsatz der zugekehrten Rahmenschenkel aufliegen und mit diesen Rahmenschenkeln verbunden sind, bei dem die Bodenbleche zumindest entlang einer Längsseite einen abgekanteten Rand aufweisen, bei dem Dichtungsstreifen (17) die aufeinanderstoßenden Längsseiten benachbarter Bodenbleche abdichten und bei dem Kabel durch Aussparungen (11,11.1,11.2) der Bodenseite eingeführt sind,
dadurch gekennzeichnet,
daß zumindest ein Teil der Bodenbleche (10,10.1) entlang der Längsseite mit dem Rand Aussparungen (11, 11.1, 11.2) aufweist und
daß in die Aussparungen (11, 11.1, 11.2) Kabeltüllen (22, 22.1, 22.2, 22.3) einsetzbar sind, die stufenweise abgesetzte Zapfenstücke (21.1, 21.2, 21.3) mit unterschiedlichen Innendurchmessern aufweisen.

2. Schaltschrank nach Anspruch 1,
dadurch gekennzeichnet,
daß die Kabeltüllen (22, 22.1) an einer portalartigen Grundplatte (20, 20.1, 20.2, 20.3) angeformt sind, die eine über die portalartige Seite verlaufende Nut (23,24) aufweisen, und
daß die zwischen den portalartigen Aussparungen (11, 11.1, 11.2) verbleibenden Randstücke (12) der Bodenbleche (10, 10.1) beidseitig Aufnahmenuten (13,14) aufweisen, die sich an die Unterseite des Bodenbleches (10, 10.1) anschließen.

3. Schaltschrank nach Anspruch 1 oder 2,
dadurch gekennzeichnet,
daß in einem Bodenblech (10) in gleichmäßigen Abständen identische Aussparungen (11) eingebracht sind, in die identische Grundplatten (20) mit gleichen oder unterschiedlichen Kabeltüllen (22) einsetzbar sind (Fig. 1).

4. Schaltschrank nach Anspruch 1 oder 2,
dadurch gekennzeichnet,
daß in einem Bodenblech (10.1) unterschiedlich große Aussparungen (11.1, 11.2) eingebracht sind und
daß in die Aussparungen (11.1, 11.2) unterschiedliche Kabeltüllen (22.1, 22.2, 22.3) einsetzbar sind.

5. Schaltschrank nach Anspruch 3 oder 4,
dadurch gekennzeichnet,
daß eine in die Aussparung (11, 11.1, 11.2) einsetzbare Grundplatte (20.2, 20.3) mehrere Kabeltüllen (22.2, 22.3) trägt, die identische oder unterschiedliche Zapfenstücke aufweisen.

6. Schaltschrank nach einem der Ansprüche 1 bis 5,
dadurch gekennzeichnet,
daß alle Aussparungen (11, 11.1, 11.2) aller Bodenbleche (10, 10.1) mit Kabeltüllen (22, 22.1, 22.2, 22.3) bestückt sind, bei denen das kleinste Zapfenstück verschlossen ist.

7. Schaltschrank nach einem der Ansprüche 1 bis 6,
dadurch gekennzeichnet,
daß zur Erdung der Bodenbleche (10, 10.1, 10.3, 10.4, 10.5) mit oder ohne Aussparungen (11, 11.1, 11.2) im Bereich der Schmalseiten Bohrungen (41), aufgeschweißte Bolzen oder aufgeschweißte Erdungsflachstecker vorgesehen sind, wobei die Bohrungen (41) auch als Befestigungsbohrungen für die Verschraubung der Bodenbleche mit den zugekehrten Rahmenschenkeln (31,33) des Rahmengestelles (30) verwendet sind.

8. Schaltschrank nach einem der Ansprüche 1 bis 6,
dadurch gekennzeichnet,
daß ein Mutternteil (38) mit einem Halteansatz (39) in eine Befestigungsaufnahme (37) des zugekehrten Rahmenschenkels (z.B. 31) eingeführt ist und
daß sich eine in das Mutternteil (38) eingeschraubte Spannschraube (40) auf dem Bodenblech (z.B. 10.4) abstützt und dieses am Auflageabsatz (35) verspannt.

## Claims

1. Switchgear cabinet, including an open bottom side which is surrounded by frame members of a framework and is closable by means of individual bottom plates (10, 10.1) which can be arranged in adjacent rows, wherein the individual bottom plates (10, 10.1) lie with their narrow sides on a supporting shoulder portion of the facing frame members and are connected to these frame members, wherein the bottom plates have an angled edge along at least one longitudinal side, wherein sealing strips (17) seal the bottom plates which are adjacent abutting longitudinal sides, and wherein cables are introduced through recesses (11, 11.1, 11.2) in the bottom side, characterised in that at least some of the bottom plates (10, 10.1) have recesses (11, 11.1, 11.2) along the longitudinal side having the edge, and in that cable sleeves (22, 22.1, 22.2, 22.3) are insertable into the recesses (11, 11.1, 11.2) and have incrementally reducing plug portions (21.1, 21.2, 21.3) of different internal diameters.

2. Switchgear cabinet according to claim 1, characterised in that the cable sleeves (22, 22.1) are formed to fit on a portal-like base plate (20, 20.1, 20.2, 20.3), and said plates have a groove (23, 24) which extends over the portal-like side, and in that the edge portions (12) of the bottom plates (10, 10.1) remaining between the portal-like recesses (11, 11.1, 11.2) have receiving grooves (13, 14) on each side and communicate with the underside of the bottom plate (10, 10.1).

3. Switchgear cabinet according to claim 1 or 2, characterised in that identical recesses (11) are provided at uniform spacings in a bottom plate (10), and identical base plates (20) having the same or different cable sleeves (22) are insertable into said recesses (Fig. 1).

4. Switchgear cabinet according to claim 1 or 2, characterised in that recesses (11.1, 11.2) of different size are provided in a bottom plate (10.1), and in that different cable sleeves (22.1, 22.2, 22.3) are insertable into the recesses (11.1, 11.2).

5. Switchgear cabinet according to claim 3 or 4, characterised in that a base plate (20.2, 20.3), which is insertable into the recess (11, 11.1, 11.2), is provided with a plurality of cable sleeves (22.2, 22.3), which have identical or different plug portions.

6. Switchgear cabinet according to one of claims 1 to 5, characterised in that all of the recesses (11, 11.1, 11.2) in all of the bottom plates (10, 10.1) are provided with cable sleeves (22, 22.1, 22.2, 22.3), whereby the smallest plug portion is closed.

7. Switchgear cabinet according to one of claims 1 to 6, characterised in that bores (41), welded-on bolts or welded-on plain earthing connectors are provided in the region of the narrow sides for the earthing of the bottom plates (10, 10.1, 10.3, 10.4, 10.5) with or without recesses (11, 11.1, 11.2), the bores (41) also being used as mounting bores for the screw-connection of the bottom plates to the facing frame members (31, 33) of the framework (30).

8. Switchgear cabinet according to one of claims 1 to 6, characterised in that a nut member (38), having a locking extension (39), is introduced into a mounting receiving means (37) in the facing frame member (e.g. 31), and in that a clamping screw (40), which is screwed into the nut member (38), is supported on the bottom plate (e.g. 10.4) and clamps said plate to the supporting shoulder portion (35).

## Revendications

1. Armoire de commutation avec un côté de base ouvert, qui est ceinturé par des ailes de châssis d'une carcasse de châssis, et qui peut être fermé au moyen de tôles de base individuelles (10, 10.1) qui peuvent être accolées les unes aux autres, dans laquelle les différentes tôles de base (10, 10.1) se posent par leurs petits côtés sur un épaulement d'appui des ailes de châssis qui leur font face et sont reliées à ces ailes de châssis, armoire dans laquelle les tôles de base présentent tout au moins le long d'un côté longitudinal un bord coudé, armoire dans laquelle des bandes d'étanchéité (17) assurent l'étanchéité entre les côtés longitudinaux butant l'un contre l'autre de tôles de base voisines et dans laquelle les câbles sont introduits au travers des évidements (11, 11.1, 11.2) de la face de base,
caractérisée
en ce qu'au moins une partie des tôles de base (10, 10.1) le long du côté longitudinal du bord présentent des évidements (11, 11.1, 11.2) et
en ce que dans les évidements (11, 11.1, 11.2) peuvent être introduits des passe-câble, qui présentent des tronçons graduellement en retrait (21.1, 21.2, 21.3) ayant des diamètres intérieurs différents.

2. Armoire de commutation suivant la revendication 1,
caractérisée
en ce que les passe-câble (22, 22.1) sont formés sur une plaque de base en forme de portique (20, 20.1, 20.2, 20.3) qui présente une encoche (23, 24) en regard du côté portique de la plaque de base, et
en ce que les tronçons marginaux (12) des tôles de base (10, 10.1) qui subsistent entre les évidements (11, 11.1, 11.2) en forme de portique présentent de part et d'autre des encoches de réception (13, 14) qui se raccordent au côté inférieur de la tôle de base (10, 10.1).

3. Armoire de commutation suivant la revendication 1 ou la revendication 2,
caractérisée
en ce que dans une tôle de base (10) sont pratiqués à des intervalles réguliers des évidements identiques (11), dans lesquels peuvent être placées des plaques de base identiques (20) garnies de passe-câble (22) identiques ou différents.

4. Armoire de commutation suivant la revendication 1 ou la revendication 2,
caractérisée
en ce que dans une tôle de base (10.1) sont pratiqués des évidements (11.1, 11.2) de dimensions variables et
en ce que dans les évidements (11.1, 11.2) peuvent être placés des passe-câble (22.1, 22.2, 22.3) de tailles variables.

5. Armoire de commutation suivant la revendication 3 ou la revendication 4,
caractérisée
en ce qu'une plaque de base (20.2; 20.3) pouvant être mise en place dans l'évidement (11, 11.1, 11.2) porte plusieurs passe-câble (22.2, 22.3) qui présentent des tronçons identiques ou variables.

6. Armoire de commutation suivant l'une quelconque des revendications de 1 à 5,
caractérisée
en ce que tous les évidements (11, 11.1, 11.2) de toutes les tôles de base (10, 10.1) sont garnis de pâsse-câble (22, 22.1, 22.2, 22.3), dont le tronçon le plus petit est obturé.

7. Armoire de commutation suivant l'une quelconque des revendications de 1 à 6,
caractérisée
en ce que pour la mise à la terre des tôles de base (10, 10.1, 10.3, 10.4, 10.5) avec ou sans évidements (11, 11.1, 11.2) il est prévu, dans la zone des petits côtés, des forures (41), des boulons fixés par soudage ou des fiches plates de mise à la terre fixées par soudage, les forures (41) étant également utilisées en tant que forures de fixation pour le vissage des tôles de base sur les ailes de châssis (31, 33) leur faisant face du châssis (30).

8. Armoire de commutation suivant l'une quelconque des revendications de 1 à 6,
caractérisée
en ce qu'un élément d'écrou (38) avec un épaulement de fixation (39) est introduit dans un logement de fixation (37) de l'aile de châssis (par exemple 31) qui lui fait face, et
en ce qu'une vis de serrage (40) vissée dans l'élément d'écrou (38) s'appuie sur la tôle de base (par exemple 10.4) et serre cette tôle de base contre l'épaulement d'appui (35).
